# EUROPÄISCHE PATENTSCHRIFT

(11) **EP 2 209 669 B1**
(45) Veröffentlichungstag und Bekanntmachung des Hinweises auf die Patenterteilung: **01.05.2013**
(21) Anmeldenummer: 08838904.4
(22) Anmeldetag: 06.10.2008
(51) Int. Cl.: B60N 2/62, B60N 3/06, B64D 11/06

(54) **SITZVORRICHTUNG, INSBESONDERE FLUGZEUGSITZVORRICHTUNG**
SEAT DEVICE, PARTICULARLY AIRPLANE SEAT DEVICE
ENSEMBLE SIÈGE, NOTAMMENT ENSEMBLE SIÈGE D'AVION

(30) Priorität: 10.10.2007 DE 102007048687
(43) Veröffentlichungstag der Anmeldung: 28.07.2010
(73) Patentinhaber: Recaro Aircraft Seating GmbH & Co. KG, 74523 Schwäbisch Hall (DE)
(72) Erfinder: BAUMANN, Jürgen, 78351 Bodman-Ludwigshafen (DE)
(74) Vertreter: Daub, Thomas
(86) Internationale Anmeldenummer: PCT/EP2008/008417
(87) Internationale Veröffentlichungsnummer: WO 2009/049783

(56) Entgegenhaltungen:
- EP-A- 1 342 614
- EP-A- 1 352 828
- DE-B3-102006 016 700
- DE-C1- 19 833 888

## Beschreibung

### Stand der Technik

Die Erfindung geht aus von einer Sitzvorrichtung nach dem Oberbegriff des Anspruchs 1.

Aus der DE 102 09 184 A1 ist eine Sitzvorrichtung mit einer Lagereinheit und mit einer mittels der Lagereinheit beweglich gelagerten, von einer Unterschenkelstützeinheit gebildeten Sitzeinheit, einer Arretiereinheit zur Arretierung der Sitzeinheit in verschiedenen Stellungen sowie mit einer Überlastsicherungseinheit bekannt, die eine Bewegung der Sitzeinheit bei einem Überlastfall ermöglicht. Die Überlastsicherungseinheit umfasst eine in der Arretiereinheit integrierte Kupplung, die bei einer Überlast eine Arretierung der Arretiereinheit löst.

### Vorteile der Erfindung

Die Erfindung geht aus von einer Sitzvorrichtung, insbesondere einer Flugzeugsitzvorrichtung, mit einer Lagereinheit und mit einer mittels der Lagereinheit beweglich gelagerten Sitzeinheit, mit einer Arretiereinheit zur Arretierung der Sitzeinheit in wenigstens einer Stellung sowie mit einer Überlastsicherungseinheit, die eine Bewegung der Sitzeinheit bei einem Überlastfall ermöglicht.

Es wird vorgeschlagen, dass die Überlastsicherungseinheit eine Verzögerungseinheit aufweist, die dazu vorgesehen ist, zumindest über einen Großteil eines Überlastwegs eine Verzögerung, vorzugsweise eine gleichmäßige Verzögerung zu bewirken. Dabei soll unter einer "Überlastsicherungseinheit" insbesondere eine Einheit verstanden werden, die auf eine Überlastkraft ausgelegt ist, die insbesondere größer ist als in einem ordnungsgemäßen Gebrauch auftretende Lastkräfte auf die Sitzeinheit und insbesondere dazu vorgesehen ist, eine Beschädigung der Lagereinheit, der Arretiereinheit, der Sitzeinheit und/oder einer Aktuatoreinheit durch zu große Lastkräfte zu vermeiden. Unter einem "Überlastweg" soll insbesondere ein Weg verstanden werden, den die Sitzeinheit bei einem Überlastfall maximal ausführen kann, wobei unter einem Großteil mindestens 50% vorzugsweise mindestens 70% und besonders bevorzugt mindestens 80% der Wegstrecke verstanden werden soll. Unter einer "Verzögerungseinheit" soll insbesondere eine Einheit verstanden werden, die gezielt dazu vorgesehen ist, einer Beschleunigung der Sitzeinheit in einem Überlastfall entgegen zu wirken bzw. diese in ihrer Bewegung abzubremsen, so dass zumindest nach einer Anfangsbeschleunigung bei erwarteten Überlastfällen, die Sitzeinheit eine Beschleunigung erfährt, die kleiner ist als 80%, vorzugsweise kleiner ist als 60% und besonders vorzugsweise kleiner als 40% der Erdbeschleunigung von 9,81 m/s². Ferner soll unter "vorgesehen" insbesondere speziell ausgestattet, ausgelegt und/oder programmiert verstanden werden.

Durch eine entsprechende Ausgestaltung kann ein vorteilhaft, komfortabler Überlastschutz erreicht werden, mittels dem sprunghafte Geschwindigkeitsänderungen sowie plötzliche Spannungsentladungen der Sitzvorrichtungen und dadurch bedingte Komforteinbußen und möglicherweise dadurch bedingte Verletzungen eines Bedieners sicher vermieden werden können.

Die Verzögerungseinheit kann eine Bremseinheit und/oder vorzugsweise eine Energiespeichereinheit aufweisen, wodurch die Bewegungsenergie der Sitzeinheit in einem Überlastfall vorteilhaft gespeichert werden kann, um anschließend wieder genutzt zu werden, wie vorzugsweise zur Rückstellung der Sitzeinheit und besonders vorteilhaft zur automatisierten Rückstellung. Dabei soll unter einer "automatisierten Zurückstellung" insbesondere verstanden werden, dass die Sitzeinheit aus einer Stellung, in die die Sitzeinheit während eines Überlastfalls durch eine Einwirkung einer Überlast geführt ist, nach Aufheben der Überlast automatisch, d.h. ohne Zwischenschaltung einer Handlung eines Bedieners zurückgestellt wird, und zwar vorzugsweise in seine Ausgangsstellung vor dem Überlastfall.

Die Energiespeichereinheit ist vorzugsweise dazu vorgesehen, dass diese über einen Großteil des Überlastwegs der Sitzeinheit weiter aufgeladen wird, was insbesondere heißen soll, dass über zumindest 50% der Wegstrecke des Überlastwegs die Energie in der Energiespeichereinheit weiter ansteigt.

Die Energiespeichereinheit kann von verschiedenen, dem Fachmann als sinnvoll erscheinenden Einheiten gebildet sein, wie beispielsweise von einer elektrochemischen Speichereinheit, wie insbesondere von einem Akkumulator, und/oder besonders vorteilhaft von einer Federeinheit, die dazu vorgesehen ist, in einem Überlastfall weiter vorgespannt zu werden.

Die Federeinheit kann verschiedene Federmittel aufweisen, wie Schraubendruckfedern, Torsionsfedern und/oder Gasdruckfedern, die besonders Platz sparen integriert werden können.

In einer weiteren Ausgestaltung der Erfindung wird vorgeschlagen, dass die Federeinheit eine auf eine Überlastkraft ausgelegte Vorspannkraft aufweist, so dass erst bei Auftreten einer bestimmten Überlast die Feder ausgelenkt wird und die Sitzeinheit bewegt werden kann. Durch eine entsprechende Ausgestaltung kann ein aufwendiger Auslösemechanismus vermieden und eine besonders Sichere Auslösung der Überlastsicherungseinheit besonders einfach erreicht werden.

Ferner wird vorgeschlagen, dass die Überlastsicherungseinheit dazu vorgesehen ist, bei arretierter Arretiereinheit im Überlastfall ausgelöst zu werden. Durch eine entsprechende Ausgestaltung können die Arretiereinheit und die Verzögerungseinheit vorzugsweise getrennt voneinander auf ihre Funktionen vorteilhaft ausgelegt werden und insbesondere kann die Arretiereinheit vorteilhaft vor einer unerwünscht hohen Last bewahrt werden, und zwar insbesondere, wenn die Verzögerungseinheit und vorzugsweise eine Energiespeichereinheit der Überlastsicherungseinheit in einem Kraftfluss ausgehend von der Sitzeinheit vor der Arretiereinheit angeordnet ist. Die Arretiereinheit kann dabei von verschiedenen, dem Fachmann als sinnvoll erscheinenden Einheiten gebildet sein, wie von einer mechanischen Rasteinheit, einer elektrischen Einheit und/oder von einer hydraulischen Einheit, wie von einem Hydraulikzylinder, die vorzugsweise während eines Überlastfalls in ihrer Arretierstellung verbleiben.

Eine Platz sparende Integration wird erreicht indem die Überlastsicherungseinheit wenigstens eine Torsionseinheit umfasst, und zwar insbesondere wenn die Torsionseinheit wenigsten zwei Torsionsstangen aufweist, die in einem Überlastfall relativ zueinander drehbar gelagert sind und vorzugsweise in einem normalen Betriebsfall gemeinsam gedreht werden, so dass keine Relativbewegung zwischen den Torsionsstangen auftritt. Unter einer Torsionsstange soll dabei sowohl eine Vollwelle als auch vorteilhaft eine Hohlwelle verstanden werden, die verschiedene, dem Fachmann als sinnvoll erscheinende Querschnittsprofile aufweisen können, jedoch besonders bevorzugt ein rundes Querschnittprofil aufweisen. Dabei sind die Stangen vorzugsweise zumindest teilweise ineinander gelagert, wodurch wiederum Bauraum eingespart werden kann.

Ferner können Bauteile, Bauraum, Gewicht, Montageaufwand und Kosten gespart werden, wenn die Torsionseinheit dazu vorgesehen ist, ein Arretiermoment zu übertragen, und zwar insbesondere wenn die Arretiereinheit in einem ersten Seitenbereich der Torsionseinheit und die Verzögerungseinheit in einem dem ersten Seitenbereich gegenüberliegenden zweiten Seitenbereich der Torsionseinheit angeordnet ist. Ist die Torsionseinheit von einer Torsionsstange gebildet, soll unter einem Seitenbereich insbesondere ein Endbereich der Torsionsstange verstanden werden, so dass die Arretiereinheit in einem ersten Endbereich und die Verzögerungseinheit in einem dem ersten Endbereich gegenüberliegenden zweiten Endbereich der Torsionsstange angeordnet ist.

Alternativ können die Verzögerungseinheit und die Arretiereinheit auch in einem gemeinsamen Seitenbereich der Sitzvorrichtung angeordnet sein, wodurch kurze Kraftflusswege zwischen der Verzögerungseinheit und der Arretiereinheit und damit verbunden hohe Steifigkeiten erreicht werden können.

Vorzugsweise umfasst die Sitzvorrichtung ein Hebelgetriebe, wobei die Verzögerungseinheit vorteilhaft mit wenigstens einem Hebel und vorzugsweise mit wenigstens zwei Hebeln des Hebelgetriebes verbunden ist. Durch eine entsprechende Gestaltung können vorteilhafte Übersetzungsverhältnisse einfach erreicht werden und insbesondere kann bei einer eine Federeinheit umfassenden Energiespeichereinheit ein langer Federweg einfach realisiert werden.

Die Sitzeinheit besteht erfindungsgemäβ aus einer Unterschenkelstützeinheit. Bei einer Unterschenkelstützeinheit kann mit einer entsprechenden Verzögerungseinheit ein besonders hoher Komforteffekt bei einer hohen Sicherheit erreicht werden.

In einer weiteren Ausgestaltung wird ein Sitz mit einer erfindungsgemäßen Sitzvorrichtung vorgeschlagen, wobei insbesondere der Sitz eine Aufständerfläche aufweist und die Lagereinheit der Sitzvorrichtung dazu vorgesehen ist, die von der Unterschenkelstützeinheit gebildete Sitzeinheit im Wesentlichen parallel zur Aufständerfläche auszurichten. Dabei soll unter im "Wesentlichen parallel" insbesondere verstanden werden, dass eine Stützfläche der Sitzeinheit um eine Schwenkachse der Sitzeinheit einen Winkel kleiner als 30°, vorzugsweise kleiner als 20° und besonders vorteilhaft kleiner als 10° zur Aufständerfläche einschließt.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen schematisiert dargestellten Flugzeugsitz in einer ersten Seitenansicht,
- Fig. 2: den Flugzeugsitz aus Figur 1 in einer zweiten Seitenansicht und
- Fig. 3: einen Ausschnitt des Flugzeugsitzes von oben.

### Beschreibung des Ausführungsbeispiels

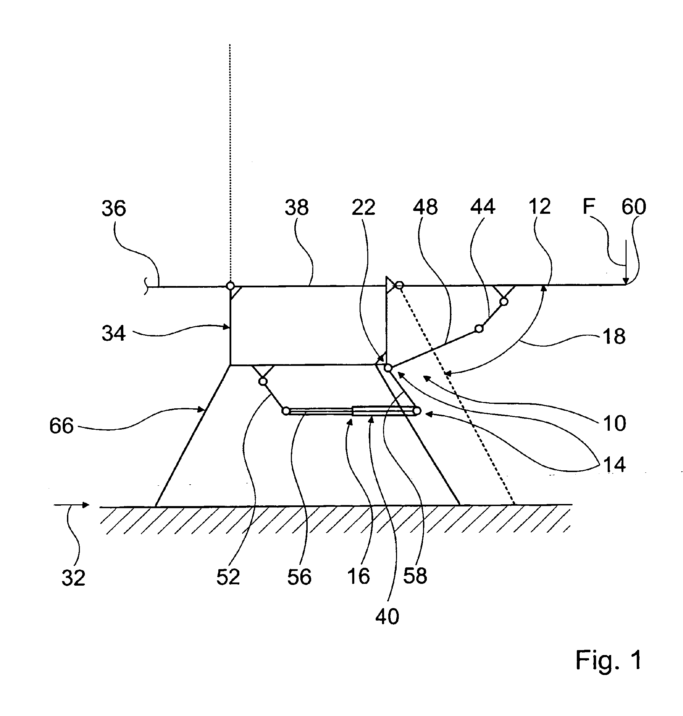

Figur 1 zeigt einen Flugzeugsitz mit einer Flugzeugsitzvorrichtung in einer ersten Seitenansicht. Die Sitzvorrichtung weist eine Grundrahmeneinheit 34 und eine von einer Beinvorrichtung 66 gebildete Aufständerfläche 32 auf, mittels der der Flugzeugsitz auf einem Flugzeugboden aufgeständert wird und die parallel zum Flugzeugboden ausgerichtet ist. Die Grundrahmeneinheit 34 ist relativ zur Aufständerfläche 32 ortsfest angeordnet könnte jedoch vorteilhaft über eine Lagereinheit relativ zur Aufständerfläche 32 beweglich gelagert sein.

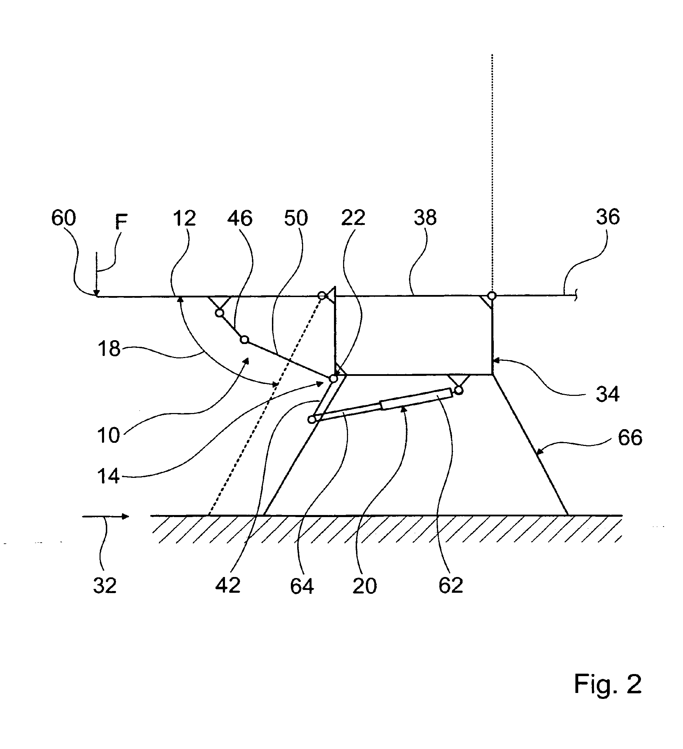

Der Flugzeugsitz weist eine von einer Rückenlehneneinheit gebildete Sitzeinheit 36, eine von einem Sitzboden gebildete Sitzeinheit 38 und eine von einer Unterschenkelstützeinheit gebildet Sitzeinheit 12 auf. Die Flugzeugsitzvorrichtung weist eine von einem Hebelgetriebe gebildete Lagereinheit 10 auf, mittels der die von der Unterschenkelstützeinheit gebildete Sitzeinheit 12 schwenkbar gelagert ist, und zwar zwischen einer im Wesentlichen senkrecht zur Aufständerfläche 32 ausgerichteten Endstellung und einer parallel zur Aufständerfläche 32 ausgerichteten Endstellung. Der Flugzeugsitz ist in Figur 1 und 2 in seiner Bettstellung dargestellt, in der die Sitzeinheit 12 in ihrer parallel zur Aufständerfläche 32 ausgerichteten Endstellung angeordnet ist, während eine Aufrechte Sitzstellung des Flugzeugsitzes in den Figuren 1 und 2 gestrichelt angedeutet sind.

Zudem umfasst die Flugzeugsitzvorrichtung eine von einem Aktuator gebildete Arretiereinheit 20, mit einem elektromotorischen Spindelantrieb, der einen Elektromotor 62 und eine Antriebsspindel 64 aufweist. Der Spindelantrieb weist eine Gewindepaarung auf, so dass zwar mittels dem Elektromotor 62 die Sitzeinheit 12 bewegt werden kann, jedoch bei einer von der Sitzeinheit 12 auf den Spindelantrieb wirkenden Kraft ohne Antrieb des Elektromotors 62 eine Selbsthemmung und damit eine Arretierung auftritt. Mittels des Aktuators kann die Sitzeinheit 12 bewegt und in sowie zwischen den Endstellungen arretiert werden. Anstatt eines elektromotorischen Spindelantriebs sind auch andere, dem Fachmann als sinnvoll erscheinende Aktuatoren und/oder Arretiermittel denkbar, wie insbesondere eine Hydraulikzylindereinheit usw.

Ferner umfasst die Flugzeugsitzvorrichtung eine Überlastsicherungseinheit 14, die eine Bewegung der Sitzeinheit 12 bei einem Überlastfall ermöglicht (Figur 1, 2 und 3). Die Überlastsicherungseinheit 14 weist eine von einer Energiespeichereinheit, und zwar von einer Federeinheit 40 gebildete Verzögerungseinheit 16 auf, die dazu vorgesehen ist, über einen Überlastweg 18 von der Endstellung, in der die Sitzeinheit 12 parallel zur Aufständerfläche 32 ausgerichteten ist, bis zur Endstellung, in der die Sitzeinheit 12 im Wesentlichen senkrecht zur Aufständerfläche ausgerichtet ist, eine Verzögerung zu bewirken.

Die Überlastsicherungseinheit 14 weist eine Torsionseinheit 22 mit einer äußeren als Hohlwelle ausgebildeten Torsionsstange 24 und einer in der äußeren Torsionsstange 26 koaxial angeordneten inneren als Hohlwelle ausgebildete Torsionsstange 26 auf, die in einem normalen Betrieb in einer Einheit, ohne Relativbewegung zueinander um ihre Längsachse drehbar gelagert sind und in einem Überlastfall relativ zueinander drehbar gelagert sind.

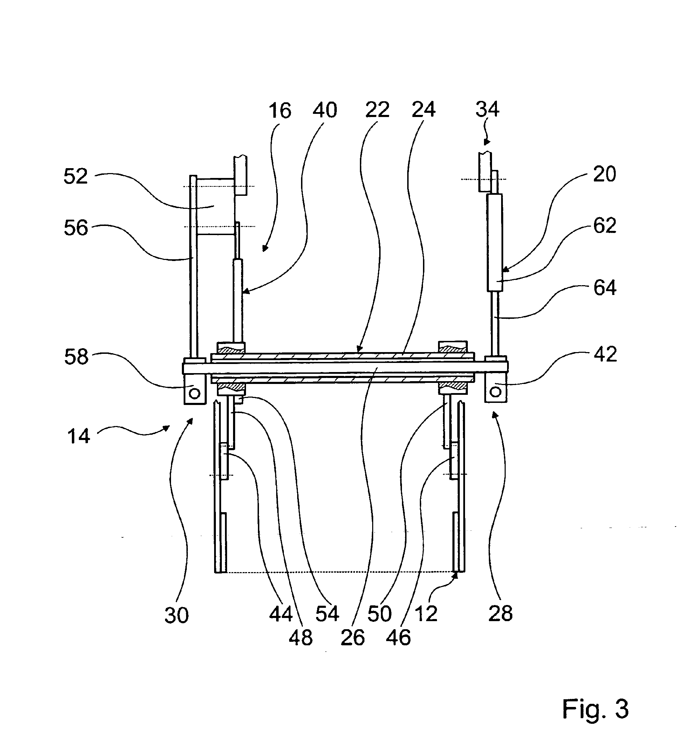

Der elektromotorische Spindelantrieb der Arretiereinheit 20 ist in einem ersten Seitenbereich 28 des Flugzeugsitzes bzw. der Torsionseinheit 22 und die Federeinheit 40 ist in einem dem ersten Seitenbereich 28 gegenüberliegenden zweiten Seitenbereich 30 des Flugzeugsitzes bzw. der Torsionseinheit 22 angeordnet (Figur 3). Der elektromotorische Spindelantrieb ist an seinem dem Sitzboden zugewandten Ende schwenkbar an der Grundrahmeneinheit 34 gelagert und ist an seiner der Sitzeinheit 12 zugewandten Seite mit einem Hebel 42 schwenkbar verbunden, der drehfest mit der inneren Torsionsstange 26 verbunden ist (Figur 2 und 3). An der Sitzeinheit 12 sind zwei Hebel 44, 46 schwenkbar gelagert, die schwenkbar mit zwei Hebeln 48, 50 verbunden sind, die drehfest mit der äußeren Torsionsstange 24 gekoppelt sind. Die von einer Gasdruckfeder bzw. von einer Gaszylindereinheit gebildete Federeinheit 40 ist zwischen zwei Hebeln 52, 54 des Hebelgetriebes angeordnet, und zwar ist die Federeinheit 40 an ihrem dem Sitzboden zugewandten Ende mit einem ersten Ende des Hebels 52 schwenkbar verbunden, der mit seinem zweiten Ende schwenkbar an der Grundrahmeinheit 34 gelagert ist (Figur 1 und 3). Der Hebel 52 ist ferner mit seinem ersten Ende mit einem ersten Ende eines Hebels 56 schwenkbar verbunden, der mit seinem zweiten Ende schwenkbar mit einem Hebel 58 verbunden ist, der drehfest mit der inneren Torsionsstange 26 gekoppelt ist. An ihrem der Sitzeinheit 12 zugewandten Ende ist die von der Gaszylindereinheit gebildete Federeinheit 40 mit dem Hebel 54 schwenkbar verbunden, der einstückig mit dem Hebel 48 ausgeführt und drehfest mit der äußeren Torsionsstange 24 verbunden ist (Figur 3). Die Federeinheit 40 ist damit im Kraftfluss zwischen den Torsionsstangen 24, 26 angeordnet.

Drückt ein Bediener bzw. ein Passagier in einer aufrechten Sitzstellung eine nicht näher dargestellte Bedientaste, werden die kinematisch mit einer nicht näher dargestellten Lagereinheit gekoppelten Sitzeinheit 36 und die Sitzeinheit 12 in ihre parallel zur Aufständerfläche 32 ausgerichteten Endstellungen, angetrieben von dem elektromotorischen Spindelantrieb, bewegt. Eine Antriebskraft wird dabei von der axial ausfahrenden Antriebsspindel 64 auf den Hebel 42 und von dem Hebel 42 über die innere Torsionsstange 26, die Hebel 58, 56, 52 auf die Federeinheit 40 und von der Federeinheit 40 über den Hebel 54 auf die äußere Torsionsstange 24 und von der äußeren Torsionsstange 24 über die Hebel 48, 50, 44, 46 auf die Sitzeinheit 12 übertragen.

Nach loslassen der Bedientaste werden die Sitzeinheiten 12, 36 arretiert, und zwar über den elektromotorischen Spindelantrieb bzw. über die Arretiereinheit 20. Bei einem entsprechenden normalen Verstellbetrieb drehen die äußere und die innere Torsionsstange 24, 26 stets gemeinsam ohne Relativbewegung zueinander um.

Eine auf die Sitzeinheit 12 wirkende Lagerkraft wird in arretiertem Zustand über die Hebel 44, 46, 48, 50 auf die äußere Torsionsstange 24 übertragen. Von der äußeren Torsionstange 24 wird die Lagerkraft über den Hebel 54 und über die Federeinheit 40 auf den Hebel 52 und von dem Hebel 52 über die Hebel 56, 58 auf die innere Torsionstange 26 übertragen, von der aus die Lagerkraft über den Hebel 42 und über die Arretiereinheit 20 an der Grundrahmeneinheit 34 abgestützt wird. Die Torsionseinheit 22 ist damit dazu vorgesehen, ein Arretiermoment zu übertragen.

Tritt in der Bettstellung ein Überlastfall auf, der insbesondere dadurch entsteht, dass sich ein Bediener auf die Sitzeinheit 12 setzt und/oder dieselbe mit einer übermäßig hohen Kraft bzw. mit einer definierten Überlastkraft F belastet wird, und zwar mit einer Überlastkraft F größer 450 N auf eine vorderste Kante 60 der Sitzeinheit 12. Die bestimmte Überlastkraft kann grundsätzlich auch andere Werte aufweisen, liegt jedoch vorteilhaft in einem Bereich zwischen 350 N und 600 N und besonders bevorzugt in einem Bereich zwischen 400 N und 550 N.

Die Federeinheit 40 weist eine auf die Überlastkraft F ausgelegte Vorspannkraft auf und wird im Überlastfall bei arretierter Arretiereinheit 20 weiter vorgespannt bzw. mit Spannenergie aufgeladen und bremst dadurch die Sitzeinheit 12 in ihrer Bewegung ab, so dass dieselbe langsam nach unten in Richtung der Aufständerfläche 32 schwenkt. Dabei ist das dem Sitzboden zugewandte Ende der Federeinheit 40 über die Hebel 52, 56, 58 und über die innere Torsionsstange 26 sowie über den Hebel 42 mittels der Arretiereinheit 20 bis auf eine mögliche Schwenkbewegung fixiert während das der Sitzeinheit 12 zugewandte Ende der Federeinheit 40 weiter in Richtung der Sitzbodeneinheit entgegen der Vorspannkraft der Federeinheit 40 bewegt wird, so dass die Federeinheit 40 verkürzt wird. Dabei wird die äußere Torsionsstange 24 relativ zur inneren Torsionsstange 26 verdreht. Die Verzögerungseinheit 16 bzw. die Federeinheit 40 ist in einem Kraftfluss ausgehend von der Sitzeinheit 12 vor der Arretiereinheit 20 bzw. dem Aktuator angeordnet, wodurch derselbe vorteilhaft vor einer Überlastung geschützt ist.

Wird die Überlastkraft F wieder aufgehoben, wird die Sitzeinheit mittels der Federeinheit 40 automatisch in ihre parallel zur Aufständerfläche 32 ausgerichtete Stellung zurück gestellt, ohne dass eine bestimmte Betätigung einer Person erforderlich ist. Alternativ könnte auch ein Mechanismus, beispielsweise ein Arretiermechanismus, vorgesehen sein, der die Sitzeinheit 12 in einem Überlastfall in einer bestimmten Stellung, beispielsweise in einer senkrecht zur Aufständerfläche 32 ausgerichteten Stellung fixiert, so dass diese erst wieder nach Lösen des Mechanismus in ihre parallel zu Aufständerfläche 32 ausgerichtete Stellung geführt wird. Der Mechanismus ist dabei vorzugsweise in der Weise ausgelegt, dass dieser nur von einem Servicepersonal bedient werden kann und nicht von einem Passagier.

Um eine gebremste Rückstellung der Sitzeinheit 12 nach Aufhebung der Überlast zu erreichen, ist in der Federeinheit 40 eine Dämpfungseinheit integriert.

### Bezugszeichen

| | | | |
|---|---|---|---|
| 10 | Lagereinheit | 56 | Hebel |
| 12 | Sitzeinheit | 58 | Hebel |
| 14 | Überlastsicherungseinheit | 60 | Kante |
| | | 62 | Elektromotor |
| 16 | Verzögerungseinheit | 64 | Antriebsspindel |
| 18 | Überlastweg | 66 | Beinvorrichtung |
| 20 | Arretiereinheit | F | Überlastkraft |
| 22 | Torsionseinheit | | |
| 24 | Torsionsstange | | |
| 26 | Torsionsstange | | |
| 28 | Seitenbereich | | |
| 30 | Seitenbereich | | |
| 32 | Aufständerfläche | | |
| 34 | Grundrahmeneinheit | | |
| 36 | Sitzeinheit | | |
| 38 | Sitzeinheit | | |
| 40 | Federeinheit | | |
| 42 | Hebel | | |
| 44 | Hebel | | |
| 46 | Hebel | | |
| 48 | Hebel | | |
| 50 | Hebel | | |
| 52 | Hebel | | |
| 54 | Hebel | | |

## Patentansprüche

1. Sitzvorrichtung, insbesondere Flugzeugsitzvorrichtung, mit einer Lagereinheit (10) und mit einer mittels der Lagereinheit (10) beweglich gelagerten Sitzeinheit (12), mit einer Arretiereinheit (20) zur Arretierung der Sitzeinheit (12) in wenigstens einer Stellung sowie mit einer Überlastsicherungseinheit (14), die eine Bewegung der Sitzeinheit (12) bei einem Überlastfall ermöglicht, wobei die Sitzeinheit (12) von einer Unterschenkelstützeinheit gebildet ist,
**dadurch gekennzeichnet,**
**dass** die Überlastsicherungseinheit (14) eine Verzögerungseinheit (16) aufweist, die dazu vorgesehen ist, zumindest über einen Großteil eines Überlastwegs (18) eine Verzögerung zu bewirken, und dass die Überlastsicherungseinheit (14) wenigstens eine Torsionseinheit (22) umfasst.

2. Sitzvorrichtung nach Anspruch 1,
**dadurch gekennzeichnet,**
**dass** die Verzögerungseinheit (16) eine Energiespeichereinheit umfasst.

3. Sitzvorrichtung nach Anspruch 2,
**dadurch gekennzeichnet,**
**dass** die Energiespeichereinheit dazu vorgesehen ist, die Sitzeinheit (12) automatisiert nach einem Überlastfall zurückzustellen.

4. Sitzvorrichtung zumindest nach Anspruch 2,
**dadurch gekennzeichnet,**
**dass** die Energiespeichereinheit eine Federeinheit (40) aufweist.

5. Sitzvorrichtung nach Anspruch 4,
**dadurch gekennzeichnet,**
**dass** die Federeinheit (40) wenigstens eine Gasdruckfeder umfasst.

6. Sitzvorrichtung nach Anspruch 4 oder 5,
**dadurch gekennzeichnet,**
**dass** die Federeinheit (40) eine auf eine Überlastkraft (F) ausgelegte Vorspannkraft aufweist.

7. Sitzvorrichtung nach einem der vorhergehenden Ansprüche,
**dadurch gekennzeichnet,**
**dass** die Überlastsicherungseinheit (14) dazu vorgesehen ist, bei arretierter Arretiereinheit (20) im Überlastfall ausgelöst zu werden.

8. Sitzvorrichtung nach einem der vorhergehenden Ansprüche,
**dadurch gekennzeichnet,**
**dass** die Torsionseinheit (22) wenigstens zwei Torsionsstangen (24, 26) aufweist, die in einem Überlastfall drehbar zueinander gelagert sind.

9. Sitzvorrichtung nach Anspruch 8,
**dadurch gekennzeichnet,**
**dass** die Torsionsstangen (24, 26) zumindest teilweise ineinander angeordnet sind.

10. Sitzvorrichtung nach einem der vorhergehenden Ansprüche,
**dadurch gekennzeichnet,**
**dass** die Torsionseinheit (22) dazu vorgesehen ist, ein Arretiermoment zu übertragen.

11. Sitzvorrichtung nach Anspruch 10,
**dadurch gekennzeichnet,**
**dass** die Arretiereinheit (20) in einem ersten Seitenbereich (28) der Torsionseinheit (22) und die Verzögerungseinheit (16) in einem dem ersten Seitenbereich (28) gegenüberliegenden zweiten Seitenbereich (30) der Torsionseinheit (22) angeordnet ist.

12. Sitzvorrichtung nach einem der vorhergehenden Ansprüche,
**gekennzeichnet durch**
ein Hebelgetriebe, wobei die Verzögerungseinheit (16) mit wenigstens einem Hebel (52, 54) des Hebelgetriebes verbunden ist.

13. Sitzvorrichtung nach einem der vorhergehenden Ansprüche,
**gekennzeichnet durch**
eine Aufständerfläche (32), wobei die Lagereinheit (10) dazu vorgesehen ist, die von einer Unterschenkelstützeinheit gebildete Sitzeinheit (12) im Wesentlichen parallel zur Aufständerfläche (32) auszurichten.

## Claims

1. Seating apparatus, in particular an aircraft seating apparatus, with a bearing unit (10) and with a seat unit (12) which is mounted movably by means of the bearing unit (10), with a locking unit (20) for locking the seat unit (12) in at least one position, and with an overload protection unit (14) which permits movement of the seat unit (12) in the event of an overload, the seat unit (12) being formed by a lower leg supporting unit,
**characterized in that**
the overload protection unit (14) has a delay unit (16) which is provided in order to bring about a delay at least over a large part of an overload displacement (18), and **in that** the overload protection unit (14) comprises at least one torsion unit (22).

2. Seating apparatus according to Claim 1,
**characterized in that**
the delay unit (16) comprises an energy storage unit.

3. Seating apparatus according to Claim 2,
**characterized in that**
the energy storage unit is provided in order to reset the seat unit (12) in an automated manner following an overload situation.

4. Seating apparatus at least according to Claim 2,
**characterized in that**
the energy storage unit has a spring unit (40).

5. Seating apparatus according to Claim 4,
**characterized in that**
the spring unit (40) comprises at least one gas-filled compression spring.

6. Seating apparatus according to Claim 4 or 5,
**characterized in that**
the spring unit (40) has a pretensioning force configured to an overload force (F).

7. Seating apparatus according to one of the preceding claims,
**characterized in that**
the overload protection unit (14) is provided in order to be triggered in the overload situation if the locking unit (20) is locked.

8. Seating apparatus according to one of the preceding claims,
**characterized in that**
the torsion unit (22) has at least two torsion rods (24, 26) which are mounted rotatably with respect to each other in an overload situation.

9. Seating apparatus according to Claim 8,
**characterized in that**
the torsion rods (24, 26) are at least partially arranged one inside the other.

10. Seating apparatus according to one of the preceding claims,
**characterized in that**
the torsion unit (22) is provided in order to transmit a locking torque.

11. Seating apparatus according to Claim 10,
**characterized in that**
the locking unit (20) is arranged in a first side region (28) of the torsion unit (22) and the delay unit (16) is arranged in a second side region (30) of the torsion unit (22), which side region lies opposite the first side region (28).

12. Seating apparatus according to one of the preceding claims,
**characterized by**
a lever mechanism, wherein the delay unit (16) is connected to at least one lever (52, 54) of the lever mechanism.

13. Seating apparatus according to one of the preceding claims,
**characterized by**
a standing surface (32), wherein the bearing unit (10) is provided in order to align the seat unit (12), which is formed by a lower leg supporting unit, substantially parallel to the standing surface (32).

## Revendications

1. Ensemble de siège, en particulier ensemble de siège d'avion, avec une unité de paliers (10) et avec une unité de siège (12) supportée de façon mobile par l'unité de paliers (10), avec une unité d'arrêt (20) pour arrêter l'unité de siège (12) dans au moins une position ainsi qu'avec une unité de protection contre la surcharge (14), qui permet un mouvement de l'unité de siège (12) en cas de surcharge, dans lequel l'unité de siège (12) est formée par une unité d'appui des jambes, **caractérisé en ce que** l'unité de protection contre la surcharge (14) présente une unité de décélération (16), qui est prévue pour provoquer une décélération au moins pendant une grande partie d'une course de surcharge (18), et **en ce que** l'unité de protection contre la surcharge (14) comprend au moins une unité de torsion (22).

2. Ensemble de siège selon la revendication 1, **caractérisé en ce que** l'unité de décélération (16) comprend une unité d'accumulation d'énergie.

3. Ensemble de siège selon la revendication 2, **caractérisé en ce que** l'unité d'accumulation d'énergie est prévue pour ramener l'unité de siège (12) à zéro de façon automatisée après un cas de surcharge.

4. Ensemble de siège selon la revendication 2, **caractérisé en ce que** l'unité d'accumulation d'énergie présente une unité a ressort (40).

5. Ensemble de siège selon la revendication 4, **caractérisé en ce que** l'unité à ressort (40) comprend au moins un amortisseur pneumatique.

6. Ensemble de siège selon la revendication 4 ou 5, **caractérisé en ce que** l'unité à ressort (40) présente une force de précontrainte conçue pour une force de surcharge (F).

7. Ensemble de siège selon l'une quelconque des revendications précédentes, **caractérisé en ce que** l'unité de protection contre la surcharge (14) est prévue pour être déclenchée en cas de surcharge, lorsque l'unité d'arrêt (20) est arrêtée.

8. Ensemble de siège selon l'une quelconque des revendications précédentes, **caractérisé en ce que** l'unité de torsion (22) présente au moins deux barres de torsion (24, 26), qui sont montées de façon rotative l'une par rapport à l'autre dans un cas de surcharge.

9. Ensemble de siège selon la revendication 8, **caractérisé en ce que** les barres de torsion (24, 26) sont disposées au moins partiellement l'une dans l'autre.

10. Ensemble de siège selon l'une quelconque des revendications précédentes, **caractérisé en ce que** l'unité de torsion (22) est prévue pour transmettre un couple d'arrêt.

11. Ensemble de siège selon la revendication 10, **caractérisé en ce que** l'unité d'arrêt (20) est disposée dans une première région latérale (28) de l'unité de torsion (22) et l'unité de décélération (16) est disposée dans une deuxième région latérale (30) de l'unité de torsion (22) opposée à la première région latérale (28).

12. Ensemble de siège selon l'une quelconque des revendications précédentes, **caractérisé par** un mécanisme de leviers, dans lequel l'unité de décélération (16) est reliée à au moins un levier (52, 54) du mécanisme de leviers.

13. Ensemble de siège selon l'une quelconque des revendications précédentes **caractérisé par** une surface de base (32), dans lequel l'unité de paliers (10) est prévue pour aligner l'unité de siège (12) formée par l'unité de support des jambes essentiellement parallèlement à la surface de base (32).
